# EUROPÄISCHE PATENTSCHRIFT

(11) **EP 1 084 996 B1**
(45) Veröffentlichungstag und Bekanntmachung des Hinweises auf die Patenterteilung: **02.06.2004**
(21) Anmeldenummer: 00120002.1
(22) Anmeldetag: 14.09.2000
(51) Int. Cl.: C03C 17/00, C03B 17/04

(54) **Verfahren und Vorrichtung zur Herstellung innenvergüteter Glasrohre**
Process and apparatus for the fabrication of glass tubes with inner coatings
Procédé et appareil pour la fabrication de verre en forme tubulaire avec couche interieure

(30) Priorität: 15.09.1999 DE 19944268
(43) Veröffentlichungstag der Anmeldung: 21.03.2001
(73) Patentinhaber: SCHOTT ROHRGLAS GmbH, D-95448 Bayreuth (DE)
(72) Erfinder: Dick, Erhard, 95666 Mitterteich (DE); Fischer, Erich, 95666 Mitterteich (DE); Fuchs, Roland, 95666 Mitterteich (DE)
(74) Vertreter: Ripper, Monika Sigrid, Dr.

(56) Entgegenhaltungen:
- EP-A- 0 501 562
- EP-A- 0 737 562
- DE-A- 19 801 861
- GB-A- 2 027 689
- US-A- 4 717 607

## Beschreibung

Die Erfindung betrifft Verfahren zur Herstellung innenvergüteter Glasrohre und Vorrichtungen zur Durchführung des Verfahrens.

Für zahlreiche Anwendungen von Glasrohren beziehungsweise von den aus den Glasrohren (den Halbzeugen) ausgeformten Glasformkörpern ist eine hohe chemische Beständigkeit erforderlich.

Hohle Glasformkörper, die eine erhöhte chemische Resistenz der inneren Oberfläche benötigen, sind beispielsweise solche
- für den chemischen Anlagenbau
- die für Durchflußmesser für chemische aggressive Medien verwendet werden
- für analytische Zwecke (z. B. Bürettenröhren, Titrationszylinder, etc.)
- für Reagenzgläser für spezielle Zwecke
- für Ummantelungen von Meßelektroden in aggressiven Medien
- für Beleuchtungszwecke, z. B. Halogenlampen
- für Entladungslampen
- die als Komponenten für biotechnologische Reaktoren eingesetzt werden, und
- die als Behälter für medizinische Zwecke (z. B. Ampullen, Fläschchen, Spritzenkörper, Zylinderampullen, etc.) verwendet werden

Es ist zwar bekannt, Glasröhren aus Kieselglas (Quarzglas, SiO₂-Glas) als Halbzeuge für die Ausformung von hohlen Glasformkörpern herzustellen, die eine sehr hohe chemische Beständigkeit aufweisen. Solche Röhren sind jedoch wegen des hohen Schmelzpunktes des SiO₂-Glases in der Herstellung sehr aufwendig und teuer; ferner lassen sie sich nur mit begrenzter optischer Qualität herstellen und sind als Massenprodukt wenig geeignet. Solche Rohre lassen sich weiterhin nur mit sehr speziellen Vorrichtungen umformen, da einerseits die Umformungstemperaturen sehr hoch liegen, andererseits das Temperaturintervall, in dem Umformungen möglich sind, sehr klein ist.

Halbzeug-Glasrohre aus Kieselglas lassen sich daher nicht mit ausreichender Qualität und Wirtschaftlichkeit für Massenanwendungen herstellen.

Deshalb werden für großtechnische Glasröhrenprodukte überwiegend niedrig schmelzende Gläser eingesetzt, z. B. Borosilicatgläser oder Kalk-Natron-Gläser. Diese lassen sich als Rohr vorteilhaft wirtschaftlich herstellen und umformen.

Es sind bereits Verfahren bekannt, die die chemische Beständigkeit der Innenoberfläche solcher Glasrohre aus niedrig schmelzendem Glas erhöhen:

So sind Verfahren bekannt, bei denen die Glasoberfläche chemisch ausgelaugt wird.

Hierzu wird in das noch heiße Glasrohr ein entsprechendes aggressives Gas, typischerweise SO₂ oder HCl-Gas, eingeleitet, das zu Oberflächenreaktionen und Reduzierung des Alkaligehaltes in der Oberfläche führt.

Solche entalkalisierende Verfahren sind z. B. beschrieben in H.A. Schaeffer et. al.; Glastechn. Ber. 54 (1981) Nr. 8, S. 247 - 256. Die Nachteile dieser Verfahren sind, daß überwiegende toxische Gase eingesetzt werden, wobei die Glasoberfläche nach der chemischen Behandlung noch Spuren dieser aggressiven Reaktionsgase enthalten kann und daß die Glasoberflächenstruktur geschädigt wird, was zu einer erhöhten Oberfläche und zu aktiven Zentren der Oberflächen führt. Ferner ist die Verwendung solch aggressiver Gase aus Umweltgesichtspunkten und Arbeitsschutzbedingungen ungünstig. Beim Umformen solch ausgelaugten Glasröhren kann es zum Ablösen von Partikeln aus der porösen, geschädigten Oberfläche kommen. Ferner ist vor der Verwendung der ausgelaugten Glasrohre ein Waschprozeß zur Entfernung der Reaktionsprodukte notwendig. Dieser Waschprozeß macht ein nachfolgendes Trocknen und Entsorgen der Reaktionsprodukte notwendig, d. h. erhöht die Kosten für die Herstellung der Halbzeug-Glasröhren.

In der US 3,314,772 wird ein weiteres Verfahren zum Entalkalisieren von niedrig schmelzendem Glas durch Fluorisieren mittels fluorhaltiger Verbindungen, z. B. wäßriger HF-Lösungen, beschrieben, das die gleichen typischen prinzipiellen Nachteile wie die anderen vorbeschriebenen Verfahren zur Entalkalisierung aufweist.

Um die Nachteile der Entalkalisierungs-Verfahren zu vermeiden, ist es auch bekannt, rohrförmig ausgeformte Glasbehälter aus niedrig schmelzendem Glas, die insbesondere als Verpackung für pharmazeutische Materialien dienen, an ihrer Innenoberfläche mit einer Siliciumoxid (SiO₂)-Schicht zu versehen, die in ihrer Inertheit einer Quarzglasoberfläche gleichkommt (M. Walther, "Packaging of sensitive parenteral drugs in glass containers with a quartz-like surface" aus Pharmaceutical Technology Europe, May 1996, Vol. 8, Nr. 5, Seite 22 - 27.

Die Beschichtung der Innenoberfläche der ausgeformten Glasformkörper erfolgt dabei durch chemische Abscheidung des oxidischen Beschichtungsmaterials aus dessen Gasphase, insbesondere mittels eines vakuum-gestützten Plasma-CVD-Verfahrens (PECVD = Plasma enhanced chemical vapour deposition), im speziellen mittels eines gepulsten Plasmas (PICVD = Plasmaimpuls-chemical-vapour depositon). Im bekannten Fall (DE 296 09 958 U1) werden die fertig ausgeformten Behälter, d. h. die Glasformkörper selbst, innen beschichtet. Dadurch muß jeder Glasformbehälter für sich, angepaßt an seine Form, einem aufwendigen Beschichtungsvorgang unterzogen werden.

Die Erfindung liegt nun die Aufgabe zugrunde, Glasrohre, die die Halbzeuge für die verschiedenen hohlen Glasformkörper darstellen, auf einfache Weise auf ihrer inneren Oberfläche zu vergüten.

Die Lösung dieser Aufgabe gelingt mit Verfahren gemäß dem Patentanspruch 1 und Patentanspruch 22 und mit Hilfe von Vorrichtungen gemäß den Patentansprüchen 11, 16 und 17.

Bei einem an sich bekannten Rohrziehverfahren zur Herstellung von Glasrohren wird ein beschichtetes Ziehwerkzeug verwendet, beispielsweise beim Danner-Verfahren eine beschichtete Danner-Pfeife oder beim Vello-Verfahren eine beschichtete Vello-Nadel, deren Beschichtung beim Kontakt mit der inneren Oberfläche des entstehenden Rohres Beschichtungsmaterial an die Glasoberfläche abgibt.

Durch diese "Dotierung" wird die innere Oberfläche des gefertigten Rohres vergütet. Sie ist passiviert und weist eine erhöhte chemische Beständigkeit auf.

Die Abgabe von Beschichtungsmaterial sollte zur Erzielung eines ausreichenden Effekts derart sein, daß wenigstens 1,5 µg/(m² × s) der Beschichtungsfläche von der Beschichtung abgegeben werden. Dies wird gewährleistet durch das verwendete Material und seine Oberflächenbeschaffenheit.

Geeignete Beschichtungsmaterialien sind anorganische Materialien, z. B. Nitride oder vorzugsweise Oxide, die selbst hinreichend inert gegen Wasser-, Säure- oder Laugenangriff sind und bei denen bei den Temperaturen und Viskositäten bei diesem Prozeßschritt (ca. 700 °C - 1400 °C und ca 10^{3,3} dPas - 10^{7,3} dPas) genügend Diffusions- und Lösungsvorgänge an der Grenzfläche Beschichtung/Glas auftreten. Bei Gläsern mit einer Transformationstemperatur T_{g} < 500 °C ergeben sich aufgrund der niedrigen Verfahrenstemperaturen nur sehr kleine Diffusions- und Lösungsmengen und tritt an der inneren Rohroberfläche keine nennenswerte Anreicherung des Beschichtungsmaterials auf.

Da die Zeit des Kontaktes zwischen Glas und Beschichtung begrenzt ist, sind Beschichtungsmaterialien mit relativ hohen Diffusionskoeffizienten wirkungsvoller.

Bevorzugte Materialien weisen Diffusionskoeffizienten von wenigstens 1 × 10⁻¹³ m²/s bei Anwendungstemperatur auf. Die für die Materialien angegebenen Diffusionskoeffizienten beziehen sich auf ein Temperaturintervall von 800 °C bis 1200 °C, was im Bereich der Anwendungstemperaturen (s. o.: Temperaturen beim Prozeßschritt liegt) : z. B. ZrO₂: ≈ 3,8 × 10⁻¹¹; mit Konzentrationsanteilen von 0,1 - 5 Gew.-% von RN, R₃N₄, RO₂, RO, R₂O₃ (wobei R für Y, Ca, Mg, K, Si, Al, B, Ti, Mn, Co und ähnliche Elemente steht) gedoptes SiO₂: ≈ 7,7 × 10⁻¹¹; Al₂O₃: ≈ 1 × 10⁻¹³: Besonders geeignet sind ZrO₂, Al₂O₃, SiO₂, MgO und Mischungen davon, Mullit, Mischungen der genannten Oxide mit 0,1 - 20 Gew.-% RO₂, RO, R₂O₃, RN, R₃N₄ (wobei R für Y, Ca, Mg, K, Si, Al, B, Ti, Mn, Co und ähnliche Elemente steht), z. B. mit Y₂O₃ oder Spinell (MgAl₂O₄). Beschichtungen aus ZrO₂ oder mit Anteilen von ZrO_{2,} insbesondere mit Anteilen von wenigstens 5 Gew.-% ZrO₂, sind besonders bevorzugt.

Die Beschichtung kann mit üblichen Verfahren auf das Ziehwerkzeug, das i. a. aus keramischen Materialien wie Schamotte, Sillimanit, Zirconiumoxid, Zirconiumsilicat, Spinell, Cordierit, Aluminiumtitanat besteht, oder auf metallische Schichten bzw. metallische Grundkörper mit einer Dauertemperaturbeständigkeit von wenigstens 1250 °C aufgebracht werden. Dies sind z. B. die Verfahren LPPS (Low pressure plasma sprayed) und APPS (Atmospheric pressure plasma sprayed), wobei das letztgenannte Verfahren wegen der Ausbildung einer porösen Schicht besonders geeignet ist.

Hauptelement jeder Plamabeschichtungsanlage ist die Plasmaspritzpistole. Bestandteil der Plasmaspritzpistole sind Wolframelektroden und die dazu konzentrisch angeordneten Kupferdüsen. Zur Erzeugung des Plasmas wird zwischen Kathode und Anode (Düse) ein Lichtbogen gezündet. Dabei wird das konzentrisch zur Kathode zugeführte Gas (häufig Gemisch aus Argon und Helium oder Wasserstoff) ionisiert und extrem stark erhitzt (mittlere Gastemperatur ca. 10 000 K). Das hocherhitzte Gas wird stark beschleunigt und bildet außerhalb der Plasmaspritzpistole die Plasmaflamme. Innerhalb der Düse wird mit einem Fördergas (häufig Argon) das Spritzpulver zugeführt. Es werden Geschwindigkeiten von mehreren 100 m/s erreicht. Beim Auftreffen auf dem Ziehwerkzeug erstarren die Spritzpulverpartikel und bilden zusammenhängende Schichten. Dem Fachmann bekannte Verfahrensparameter wie die Winkelstellung der Plasmadüse und die Komgrößenverteilung des verwendeten Plasmapulvers beeinflussen die entstehende Porosität der Schicht. Der offene Porenraum der Beschichtungszone sollte mehr als 10 %, vorzugsweise wenigstens 15 % betragen.

I. a. werden Schichtdicken zwischen 10 µm und 2000 µm erzeugt werden. Schichtdicken von 10 µm sind bereits ausreichend. Die für die Erzielung eines ausreichenden Effekts wesentliche große Oberfläche kann statt über die Porosität auch durch die spezifische Oberfläche [m²/kg Beschichtungsmittel] beschrieben werden. Sie sollte wenigstens 50 m²/kg, vorzugsweise 75 m²/kg betragen. Das erfindungsgemäße Verfahren kann auf alle Rohrziehverfahren angewendet werden, die ein Ziehwerkzeug verwenden, welches zur Formung des Rohrhohlraumes dient bzw. diese unterstützt. Es handelt sich hierbei um an sich bekannte und bewährte Rohrziehverfahren, von denen die gebräuchlichsten kurz skizziert werden sollen:

Beim Danner-Verfahren dient als Ziehwerkzeug ein leicht schräg gestelltes, langsam rotierendes Rohr, die Danner-Pfeife, auf die ein kontinuierlicher Strang von Glasschmelze aufläuft. Am tieferen Ende der Pfeife, dem Pfeifenkopf, wird das Glas unter Bildung der "Ziehzwiebel" abgezogen, wobei durch Zuführung von Luft durch die Hohlwelle der Pfeife ein Hohlraum entsteht. Nach Umlenken in die Horizontale durchläuft das erstarrende Rohr eine Rollenbahn bis zur Ziehmaschine, hinter der durch Abschlagen eine Trennung in Rohrabschnitte erfolgt.

Beim Vello-Verfahren fließt die Glasschmelze bereits in Rohrform aus dem Speiser, da sie durch eine zylindrische Düse austritt. Die Schmelze fließt über einen Dom, die Vello-Nadel, das entsprechende Ziehwerkzeug dieses Verfahrens. Hier wird das Glas zum Rohr geformt. Auch hier wird mit Blasluftdruck gearbeitet. Das Rohr fließt zunächst senkrecht nach unten, wird dann in die Waagerechte umgelenkt und wie beim Danner-Verfahren über eine Rollenbahn abgezogen, gekühlt und zugeschnitten.

Auch beim A-Zug-Verfahren (Down-draw-Verfahren) fließ die Glasschmelze bereits in Rohrform aus dem Speiser, da sie durch eine zylindrische Form austritt. Sie fließt über das Ziehwerkzeug, einen Dom, hier die A-Zug-Nadel, wo das Glas zum Rohr geformt wird. Bei diesem Verfahren kann mit Luft gearbeitet werden. Das Rohr fließt senkrecht nach unten und wird ohne Umlenken bei Temperaturen von ca. 300 °C abgelängt.

Sowohl beim Vello- als auch bei A-Zug-Verfahren wird nicht nur der Nadelkörper sondern auch der bis zu 2 m lange Halteschaft beschichtet. Sowohl Nadelkörper als auch Halteschaft werden hier unter dem Begriff Nadel bzw. allgemein Ziehwerkzeug zusammengefaßt verwendet.

Wegen der größeren Glaskontaktfläche und damit der höheren Verweilzeit ist das Danner-Verfahren für das erfindungsgemäße Verfahren besonders gut geeignet. In Abhängigkeit von der Größe der Danner-Pfeife liegen an der Grenzfläche Beschichtungsmaterial/Glas Verweilzeiten von 0,5 bis 4 h vor, während die Verweilzeiten beim Vello- und beim A-Zug-Verfahren nur 30 bis 50 % davon betragen.

Die erfindungsgemäße Vorrichtung zeichnet sich dadurch aus, daß eine an sich bekannte Vorrichtung zum Ziehen von Glasrohren mit an sich bekannten Vorrichtungsteilen ein beschichtetes Ziehwerkzeug aufweist, dessen Beschichtung bei Kontakt mit der Innenoberfläche des entstehenden Glasrohres Beschichtungsmaterial an die Glasoberfläche abgibt.

Eine spezielle erfindungsgemäße Vorrichtung mit einer Rohrziehanlage nach Danner zeichnet sich dadurch aus, daß in ihr eine geneigte, drehbare, rotationssymmetrische, beschichtete Pfeife angeordnet ist. Damit von der Beschichtung beim Ziehen des Glasrohres genügend Material an dessen innere Glasoberfläche abgegeben wird, weist das vorzugsweise ZrO₂ und/oder SiO₂ und/oder Al₂O₃ und/oder MgO enthaltende Beschichtungsmaterial vorzugsweise einen Diffusionskoeffizienten von wenigstens 1 × 10⁻¹³ m²/s auf. Die bevorzugten Materialien und ihre Oberflächeneigenschaften und Schichtdicken sind bei der Verfahrensbeschreibung genannt.

Eine solche Vorrichtung zum Rohrziehen nach Danner weist weiterhin eine Düse auf, aus der das Glas aus der Speiserrinne auf die Pfeife läuft. Weiter besitzt sie einen Ofen, beispielsweise einen gasbeheizten Muffelofen, zur Einstellung eines Temperaturgradienten zwischen dem Auslauf aus der Düse und dem Pfeifenende sowie eine Blasvorrichtung zur Beaufschlagung des Innenraumes des abzuziehenden Glasrohres mit einem Über- oder Unterdruck gegenüber dem Umgebungsdruck.

Beim Danner-Verfahren liegt die Temperaturdifferenz zwischen dem Auslauf aus der Düse und dem Pfeifenende in Abhängigkeit von der Glasart und dem zu fertigenden Rohr bei ca. 400 K. Dabei beträgt unabhängig von der Glasart der Viskositätsbereich zwischen Auslauf der Düse und Pfeifenende 10^{3,3} bis 10^{5,9} dPas in Abhängigkeit vom zu fertigenden Rohr.

Die Anreicherung der Innenoberfläche des Rohres mit dem Beschichtungsmaterial ist in geringem Umfang auch beeinflußbar durch:
- die spezifischen Pfeifenbelastung in kg/m² × h
- die Energieeinbringung im gasbeheizten Muffelofen
- die Größe des Muffelofens
- die Wärmeleitfähigkeit des Materials der Dannerpfeife
- das Material des Muffelofens
- die Gesamtkonstruktion der Pfeife

Eine spezielle erfindungsgemäße Vorrichtung mit einer Rohrziehanlage nach Vello oder einer A-Zug-Rohrziehanlage zeichnet sich dadurch aus, daß in ihr eine beschichtete Rohrziehnadel senkrecht angeordnet ist. Hier sind als Beschichtung dieselben Materialien und Schichtdicken wie oben beschrieben bevorzugt. Ihr Diffusionskoeffizient beträgt vorzugsweise wenigstens 1 × 10⁻¹³ m²/s. Weiter besitzt sie eine vorzugsweise elektrisch beheizte Muffel zur Steuerung der Verformungstemperatur sowie eine Blasvorrichtung zur Beaufschlagung des Innenraums des abzuziehenden Glasrohres mit einem Über- bzw. Unterdruck. Die Anlage nach Vello besitzt eine Umlenkeinrichtung, mit der der Glas-Schlauch im plastischen Zustand in die Horizontale umgelenkt wird.

Anstatt eines beschichteten Ziehwerkzeuges kann bei dem Verfahren zur Herstellung innenvergüteter Glasrohre auch ein unbeschichtetes Ziehwerkzeug verwendet werden, das selbst ausreichend porös ist und das während des Kontaktes mit der Innenoberfläche des entstehenden Rohres Material abgibt, das an der inneren Glasoberfläche angereichert wird.

Die Eigenschaften und bevorzugten Ausführungen hinsichtlich Material, Materialabgabe, Diffusionskoeffizient entsprechen beim an sich porösen Ziehwerkzeug denen der porösen Beschichtung eines Ziehwerkzeuges. Vorzugsweise wird ein Ziehwerkzeug aus ZrO₂ oder Sillimanit verwendet. Das Ziehwerkzeug soll eine Porosität, d. h. einen offenen Porenraum von wenigstens 10 % besitzen. Bekannterweise lassen sich poröse Körper bspw. durch Sintern herstellen.

Für dieses Verfahren mit porösem Ziehwerkzeug besonders geeignet ist das Danner-Verfahren unter Verwendung einer porösen Pfeife, beispielsweise aus ZrO₂ oder Sillimanit.

Die Abgabe des Materials ist sowohl bei den beschichteten Ziehwerkzeugen als auch bei den porösen Körpern so gering, daß sie für die Standzeiten der Ziehwerkzeuge unproblematisch ist.
Beispiel: Eine mit 93 Gew.-% ZrO₂ und 7 Gew.-% Y₂O₃ beschichtete Ziehnadel mit einer Beschichtungsdicke von 400 µm wurde 28 Tage bei Temperaturen von 1240 °C bei einem Aluminosilikatglas mit einem Glasdurchsatz von ca. 5000 kg/Tag gefahren. Nach dieser Zeit lag eine Abnahme der Beschichtungsdicke von ca. 20 µm (entspricht ca. 5 %) vor. Daraus läßt sich eine Standzeit von ca. 500 Tagen hochrechnen. Die Standzeit von Edelmetallbauteilen liegt im Mittel bei ca. 1 Jahr.

Im folgenden wird die Erfindung anhand der Figuren und der Ausführungsbeispiele weiter erläutert:

Figuren:
- Figur 1: zeigt schematisch den Aufbau einer Vorrichtung mit einer Rohrziehanlage nach Danner.
- Figur 2: zeigt schematisch den Aufbau einer Vorrichtung mit einer Rohrziehanlage nach Vello.

Bei den Figuren ist die Darstellung auf die Vorrichtung, die der Formgebung dient, beschränkt; es schließen sich jeweils die üblichen nicht dargestellten Bauteile Ziehkanal mit Ziehbahn und Ziehmaschine mit Abtrennvorrichtung an.

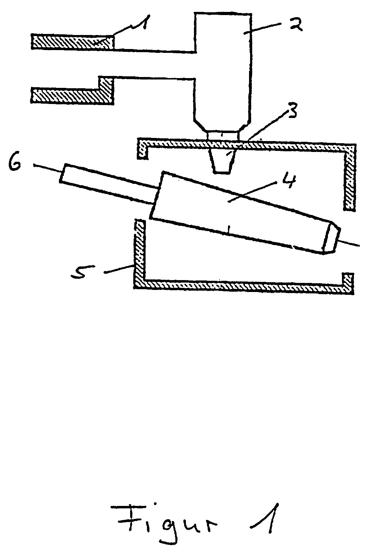

Figur 1 zeigt bei der Rohrziehanlage nach Danner den Glasschmelze enthaltenden Verteiler 1 und Tiegel 2. Aus letzterem tritt durch die Düse 3 das geschmolzene Glas als kontinuierlicher Strang aus und trifft auf das Ziehwerkzeug, die geneigte beschichtete rotierende Pfeife 4. Die Pfeife und der Auslauf aus der Düse befinden sich in einem Ofen 5, der einen Temperaturgradienten zwischen den Auslauf aus der Düse und dem Pfeifenende gewährleistet. Eine Blasvorrichtung 6 dient der Beaufschlagung des Innenraums des abzuziehenden Glasrohres mit Überdruck gegenüber dem Umgebungsdruck.
Das Glas wird von der Pfeife abgezogen und (nicht mehr eingezeichnet) in die Horizontale umgelenkt.

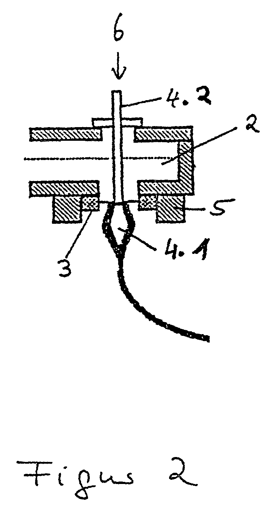

Bei der Vorrichtung gemäß Figur 2 tritt das Glas aus dem Tiegel 2 durch die zylindrische Düse 3 auf die senkrechte Vello-Nadel 4 mit dem Nadelkörper 4.1 und dem Nadelschaft 4.2. Die Düse befindet sich in der Muffel 5.
Das von der Nadel senkrecht abfließende Rohr wird in die Horizontale umgelenkt und abgezogen.

Auch beim A-Zug tritt analog zu Figur 2 das Glas aus einem Tiegel 2 durch eine zylindrische Düse 3 auf eine senkrechte A-Zug-Nadel 4. Sie befindet sich in einer Muffel 5. Durch die Nadel 4 wird auch hier an Position 6 Blasluft zugeführt. Im Unterschied zum Vello-Verfahren bleibt das von der Nadel senkrecht abfließende Rohr in senkrechter Richtung.

### Ausführungsbeispiele:

1) Mit Hilfe des Danner-Verfahrens mit einer Pfeife, deren Oberfläche mittels des APPS-Verfahrens mit einer Beschichtung aus einem Gemisch aus 93 Gew.-% ZrO₂ und 7 Gew.-% Y₂O₃ mit einer Schichtdicke von 450 µm versehen ist, werden aus einem alkali- und erdalkalihaltigen Aluminoborosilicatglas mit einem Tg von 550 °C Rohre mit einem Außendurchmesser von 10,75 mm und einer Wanddicke von 0,50 mm und mit einem Außendurchmesser von 22,00 mm und einer Wanddicke von 1,00 mm gezogen:
   Die Verweilzeiten betragen 110 bzw. 120 min, die Pfeifenlänge beträgt 1,5 m. Die notwendige Pfeifenlänge ergibt sich aus der spezifischen Pfeifenbelastung [kg/m² × h] und dem Pfeifendurchmesser. Eine Abhängigkeit von der Ziehgeschwindigkeit besteht nicht, da Änderungen der Ablaufgeschwindigkeit nur nach Verlassen des Glases von der Pfeife auftreten. In üblichen Danner-Anlagen ist das erfindungsgemäße Verfahren ohne prinzipielle Änderungen verfahrenstechnischer Parameter ausführbar. Die üblichen Variationen bei Ziehverfahren zur Einstellung der besten Ziehbedingungen sind dem Fachmann bekannt. Die Beschichtungslänge beträgt in der Regel ca. 70 % der Dannerpfeifenlänge.
   Die so gezogenen Rohre weisen auf ihrer inneren Oberfläche und in einem dünnen Oberflächenbereich einen ZrO₂ - Gehalt auf. Dieser beträgt direkt an der Oberfläche ca. 10 Gew.-% und sinkt auf ca. 0,4 Gew.-% in einer Tiefe von 0,16 mm.
2) Mit Hilfe des Vello-Verfahrens mit einer Rohrziehnadel, deren Oberfläche mit 93 Gew.-% ZrO₂ und 7 Gew.-% Y₂O₃ nach dem APPS-Verfahren mit einer Schichtdicke von 450 µm beschichtet ist, werden Rohre mit einem Außendurchmesser von 16,00 mm und einer Wanddicke von 1,4 mm und mit einem Außendurchmesser von 11,3 mm und einer Wanddicke von 1,0 mm aus einem erdalkalihaltigen alkalifreien Aluminoborosilicatglas (Tg = 725 °C) gezogen, das 1 Gew.-% ZrO₂ enthält.

Die so gezogenen Rohre besitzen auf ihrer inneren Oberfläche einen ZrO₂ - Gehalt von 3,5 Gew.-%, der ins Innere des Glases bis auf 0,3 Gew.-% in einer Tiefe von 0,1 mm sinkt. Diese mittels SIMS gemessenen Konzentrationsabgaben stellen die jeweilige relative Differenz zum Grundglas dar.

Diese Veränderung der inneren Oberfläche der Rohre stellt eine Vergütung dar, da ihre chemische Beständigkeit deutlich verbessert ist, wie die nachfolgenden Meßergebnisse demonstrieren:

Das unter 1) in Rohren verarbeitete Aluminoborosilicatglas (75 Gew.-% SiO₂, 11 B₂O₃; 5 Al₂O₃; 7 Na₂O; 0,5 BaO, 1,5 CaO) weist auch ohne die erfindungsgemäße Behandlung bereits sehr gute chemische Beständigkeiten auf, nämlich eine hydrolytische Beständigkeit nach DIN 52339 - ISO 4802 der Hydrolytischen Klasse 1, eine Säurebeständigkeit nach ISO 11776 der Säureklasse 1 und eine Laugenbeständigkeit nach ISO 695 der Laugenklasse 2. Eine weitere Verbesserung der schon sehr guten chemischen Beständigkeit hat unter anderem auch den Vorteil, daß das Glas bei der Verarbeitung zu Produkten wie z. B. Ampullen höheren Temperaturen ausgesetzt werden kann, ohne daß es zur Überschreitung von Grenzwerten bezüglich der Auslaugung kommt.

Aus dem gemäß 1) gezogenen Rohren werden Ampullen (A) mit einem Nennvolumen von 2 ml und einer Rohrabmessung von 10,75 mm Außendurchmesser und 0,50 mm Wanddicke geformt. Als Vergleich werden Ampullen (V) der gleichen Abmessungen aus auf einer Danner-Anlage mit unbeschichteter Pfeife unter ansonsten gleichen Bedingungen gezogenen Rohren geprüft.
a) Oberflächen-Prüfverfahren nach DIN 52 339 zur Bestimmung der Hydrolytischen Beständigkeit (flammenphotometrische Bestimmung);

| | A | V |
|---|---|---|
| Na-Auslaugung | 2.22 ppm Na₂O | 2.37 ppm Na₂O |
| Klasse | 1 | 1 |

b) Bestimmung der Säurebeständigkeit in Anlehnung an ISO 1776: In die gereinigten Ampullen werden jeweils 2,5 ml (ca. Halsverengung) vortemperierte HCl(c = 6 mol/l) eingefüllt und für 3 h bei 100 °C in den Trockenschrank gestellt. Anschließend wird der Na₂O-Gehalt (in mg/Füllvolumen) bestimmt und auf die benetzte Innenoberfläche (in dm²) mit dem Ergebnis mg Na₂O/dm² umgerechnet. Die Bestimmung erfolgt mit FAS (Flammenabsorptionsspektroskopie)

| | A | V |
|---|---|---|
| Na - Auslaugung | 0,066 mg Na₂O/dm² | 0,075 mg Na₂O/dm² |

c) Bestimmung der Laugenbeständigkeit in Anlehnung an ISO 695: In die gereinigten Ampullen werden jeweils 2,5 ml (ca. Halsverengung) vortemperierter Mischlauge nach DIN eingefüllt und für 3 h bei 100°C in den Trockenschrank gestellt. Um eine Übersättigung bzw. einen stärkeren pH-Abfall der Lösung zu verhindern, wird die Mischlauge stündlich erneuert. Anschlieβend wird der Gewichtsverlust in mg gemessen und auf die benetzte Oberfläche des Prüfstückes umgerechnet mit dem Ergebnis mg/dm² Gewichtsverlust.

| A | | V |
|---|---|---|
| Gewichtsverlust | 43 mg/dm² | 50 mg/dm² |

Bei den Untersuchungen gemäß b) und c) können keine Klassenangaben gemäß ISO angegeben werden, sondern die Ergebnisse von A und V stellen nur einen Vergleich untereinander dar, da die Versuche nur in Anlehnung an die genannten Normen durchgeführt werden. Sowohl bei der Bestimmung der Säurebeständigkeit nach ISO 1776 als auch bei der Laugenbeständigkeitsbestimmung nach ISO 695 wird das zu untersuchende Glas zu Grieß zerkleinert und dann untersucht. Für eine Innenoberflächenvergütung sind solche Untersuchungsmethoden nicht aussagekräftig, da nur kleinste Bereiche der Glaswanddicke mit Beschichtungsmaterial angereichert sind.

Bei allen gemessenen Aspekten der chemischen Beständigkeit zeigt sich eine Verbesserung bei den innenvergüteten Rohren.
Mit dem Verfahren gemäß der Erfindung gelingt es also, Glasrohre zur Verfügung zu stellen, deren innere Oberfläche vergütet ist, so daß sie als Halbzeug für hohle Glasformkörper geeignet sind, an die hohe Anforderungen bezüglich der chemischen Beständigkeit ihrer inneren Oberfläche gestellt werden.

Ein Halbzeug (oder Halbfabrikat) ist bekanntlich ein halbfertiges Erzeugnis, eine Ware zwischen Rohstoffen und Fertigfabrikat, die verschiedene Fertigungsstufen hinter sich hat, aber noch weitere durchlaufen muß.

Im konkreten Fall handelt es sich um das Umformen der Glasrohre zu verschiedenen hohlen Glasformkörpem. Solche Umformungsprozesse sind z. B. Prozesse, bei denen am Ende der Glasrohre Verjüngungen, Abschmelzungen, Umformungen angebracht werden, z. B. um diese zusammenzufügen, zu verschließen, zu verbinden etc.

Hohle Glasformkörper mit einem eher geringen Ausformungsgrad sind z. B. zylindrische Körper, die aus dem Halbzeug durch Heiß- oder Kaltformung hergestellt werden, und die letztlich nur noch an ihren Stirnseiten "bearbeitet" werden müssen. Solche Glasformkörper sind beispielsweise Spritzenzylinder.

Hohle Glasformkörper mit einem höheren Ausformungsgrad sind z. B. Lampenkolben, Fläschchen, Ampullen.

Auch bei solchen Glasformkörpern ist die chemische Beständigkeit der inneren Oberfläche verbessert, wenn zu ihrer Herstellung nach dem erfindungsgemäβen Verfahren hergestellte Glasrohre verwendet werden.

Die nach den erfindungsgemäßen Verfahren hergestellten Glasrohre sind also hervorragend geeignet, verwendet zu werden beispielsweise für die Herstellung von
- Behälter für medizinische Zwecke wie Ampullen, Fläschchen, Spritzenkörpem, Zylinderampullen.
- Lampenkolben, insbesondere Lampenkolben für Halogenlampen
- Reagenzgläsern, Büretten, Pipetten, Titrationszylindern
- röhrenförmigen Teilen für den chemischen Anlagenbau, Komponenten für biotechnologische Reaktoren

Da bei den erfindungsgemäßen Verfahren die innenvergüteten Glasrohre kontinuierlich und ohne zusätzlichen Prozeßschritt, verglichen mit der Herstellung nicht-vergüteter Glasrohre, hergestellt werden, ist dies ein sehr einfaches und wirtschaftliches Verfahren, verglichen mit den bisherigen Verfahren wie dem Auslaugen der inneren Oberfläche von Glasrohren oder gar dem Innenbeschichten von hohlen Glasformkörpern.

## Patentansprüche

1. Verfahren zur Herstellung innenvergüteter Glasrohre,
**dadurch gekennzeichnet,**
**daß** bei einem an sich bekannten Rohrziehverfahren zur Herstellung von Glasrohren ein beschichtetes Ziehwerkzeug verwendet wird, dessen Beschichtung bei Kontakt mit der Innenoberfläche des entstehenden Rohres Beschichtungsmaterial abgibt und an der inneren Glasoberfläche anreichert.

2. Verfahren nach Anspruch 1,
**dadurch gekennzeichnet,**
**daß** ein Ziehwerkzeug verwendet wird, dessen Beschichtung wenigstens 1,5 µg/(m² × s) an Beschichtungsmaterial abgibt.

3. Verfahren nach Anspruch 1 oder 2,
**dadurch gekennzeichnet,**
**daß** ein Ziehwerkzeug verwendet wird, dessen Beschichtung eine spezifische Oberfläche von wenigstens 50 m²/kg aufweist.

4. Verfahren nach Anspruch 1 oder 2,
**dadurch gekennzeichnet,**
**daß** ein Ziehwerkzeug verwendet wird, dessen Beschichtung einen offenen Porenraum von mehr als 10 % aufweist.

5. Verfahren nach wenigstens einem der Ansprüche 1 bis 4,
**dadurch gekennzeichnet,**
**daß** es sich bei dem Rohrziehverfahren um ein Verfahren nach Danner handelt, bei dem eine beschichtete Pfeife verwendet wird.

6. Verfahren nach wenigstens einem der.Ansprüche 1 bis 4,
**dadurch gekennzeichnet,**
**daß** es sich bei dem Rohrziehverfahren um ein Verfahren nach Vello handelt, bei dem eine beschichtete Nadel verwendet wird.

7. Verfahren nach wenigstens einem der Ansprüche 1 bis 4,
**dadurch gekennzeichnet, daß** es sich bei dem Rohrziehverfahren um ein A-Zug-Verfahren handelt, bei dem eine beschichtete Nadel verwendet wird.

8. Verfahren nach wenigstens einem der Ansprüche 1 bis 7,
**dadurch gekennzeichnet,**
**daß** ein beschichtetes Ziehwerkzeug verwendet wird, dessen Beschichtungsmaterial bei den Anwendungstemperaturen einen Diffusionskoeffizienten von wenigstens 1 × 10⁻¹³ m²/s besitzt.

9. Verfahren nach wenigstens einem der Ansprüche 1 bis 8,
**dadurch gekennzeichnet,**
**daß** ein Ziehwerkzeug verwendet wird, dessen Beschichtung ZrO₂ und /oder Al₂O₃ und/oder SiO₂ und/oder MgO enthält.

10. Verfahren nach Anspruch 9,
**dadurch gekennzeichnet,**
**daß** ein beschichtetes Ziehwerkzeug verwendet wird, dessen Beschichtung ZrO₂ enthält.

11. Vorrichtung zur Herstellung innenvergüteter Glasrohre nach dem Verfahren gemäß Anspruch 5
mit
- einer Rohrziehanlage nach Danner, in der eine geneigte, drehbare, rotationssymmetrische, beschichtete Pfeife angeordnet ist, deren Beschichtungsmaterial, enthaltend ZrO₂ und/oder SiO₂ und/oder Al₂O₃ und/oder MgO, bei den Anwendungstemperaturen einen Diffusionskoeffizienten von wenigstens 1 × 10⁻¹³ m²/s besitzt
- einem Ofen zur Einstellung eines Temperaturgradienten zwischen dem Auslauf aus der Düse und dem Pfeifenende,
- einer Blasvorrichtung zur Beaufschlagung des Innenraumes des abzuziehenden Glasrohres mit einem Überdruck oder Unterdruck gegenüber dem Umgebungsdruck

12. Vorrichtung nach Anspruch 11,
**dadurch gekennzeichnet,**
**daß** die Beschichtung der Pfeife eine spezifische Oberfläche von wenigstens 50 m²/kg aufweist.

13. Vorrichtung nach Anspruch 11,
**dadurch gekennzeichnet,**
**daß** die Beschichtung der Pfeife einen offenen Porenraum von mehr als 10 % aufweist.

14. Vorrichtung nach wenigstens einem der Ansprüche 11 bis 13,
**dadurch gekennzeichnet,**
**daß** die Beschichtung der Pfeife eine Dicke von wenigstens 10 µm aufweist.

15. Vorrichtung nach wenigstens einem der Ansprüche 11 bis 14,
**dadurch gekennzeichnet,**
**daß** die Beschichtung der Pfeife ZrO₂ enthält.

16. Vorrichtung zur Herstellung innenvergüteter Glasrohre nach dem Verfahren gemäß Anspruch 6
mit
- einer Rohrziehanlage nach Vello, in der eine beschichtete Nadel senkrecht angeordnet ist, deren Beschichtungsmaterial, enthaltend ZrO₂ und/oder Al₂O₃ und/oder SiO₂ und/oder MgO, einen Diffusionskoeffizienten von wenigstens 1 × 10⁻¹³ m²/s
- einer Vellomuffel
- einer Blasvorrichtung zur Beaufschlagung des Innenraums des abzuziehenden Glasrohres mit einem Über- oder Unterdruck gegenüber dem Umgebungsdruck

17. Vorrichtung zur Herstellung innenvergüteter Glasrohre nach dem Verfahren gemäß Anspruch.7
mit
- einer A-Zug-Rohrziehanlage, in der eine beschichtete Nadel senkrecht angeordnet ist, deren Beschichtungsmaterial, enthaltend ZrO₂ und/oder Al₂O₃ und/oder SiO₂ und/oder MgO, bei den Anwendungstemperaturen einen Diffusionskoeffizienten von wenigstens 1 × 10⁻¹³ m²/s besitzt,
- einer Muffel
- einer Blasvorrichtung zur Beaufschlagung des Innenraumes des abzuziehenden Glasrohres mit einem Über- oder Unterdruck gegenüber dem Umgebungsdruck

18. Vorrichtung nach Anspruch 16 oder 17,
**dadurch gekennzeichnet,**
**daß** die Beschichtung der Nadel eine spezifische Oberfläche von wenigstens 50 m²/kg aufweist.

19. Vorrichtung nach Anspruch 16 oder 17,
**dadurch gekennzeichnet,**
**daß** die Beschichtung der Nadel einen offenen Porenraum von mehr als 10 % aufweist.

20. Vorrichtung nach wenigstens einem der Ansprüche 16 bis 19,
**dadurch gekennzeichnet,**
**daß** die Beschichtung der Nadel eine Dicke von wenigstens 10 µm aufweist.

21. Vorrichtung nach wenigstens einem der Ansprüche 16 bis 20,
**dadurch gekennzeichnet,**
**daß** die Beschichtung der Nadel ZrO₂ enthält.

22. Verfahren zur Herstellung innenvergüteter Glasrohre,
**dadurch gekennzeichnet,**
**daß** bei einem an sich bekannten Rohrziehverfahren zur Herstellung von Glasrohren ein poröses Ziehwerkzeug verwendet wird, das bei Kontakt mit der Innenoberfläche des entstehenden Rohres Material abgibt und an der inneren Glasoberfläche anreichert.

23. Verfahren nach Anspruch 22,
**dadurch gekennzeichnet,**
**daß** ein Ziehwerkzeug verwendet wird, das wenigstens 1,5 µg/(m² × s) Material abgibt.

24. Verfahren nach Anspruch 22 oder 23,
**dadurch gekennzeichnet,**
**daß** ein Ziehwerkzeug verwendet wird, das einen offenen Porenraum von mehr als 10 % aufweist.

25. Verfahren nach wenigstens einem der Ansprüche 22 bis 24,
**dadurch gekennzeichnet,**
**daß** es sich bei dem Rohrziehverfahren um ein Verfahren nach Danner handelt, bei dem eine poröse Pfeife verwendet wird.

26. Verfahren nach wenigstens einem der Ansprüche 22 bis 25,
**dadurch gekennzeichnet,**
**daß** ein Ziehwerkzeug verwendet wird, das aus einem Material besteht, das ZrO₂ und/oder Al₂O₃ und/oder SiO₂ enthält und das bei den Anwendungstemperaturen einen Diffusionskoeffizienten von wenigstens 1 × 10⁻¹³ m²/s besitzt.

## Claims

1. Process for producing internally coated glass tubes, **characterized in that** a coated drawing tool, the coating of which releases coating material on contact with the inner surface of the tube which is being formed, so that the levels of this material are enriched on the inner surface of the glass, is used in a tube-drawing process which is known per se for the production of glass tubes.

2. Process according to Claim 1, **characterized in that** a drawing tool whose coating releases at least 1.5 µg/(m² × s) of coating material is used.

3. Process according to Claim 1 or 2, **characterized in that** a drawing tool whose coating has a specific surface area of at least 50 m²/kg is used.

4. Process according to Claim 1 or 2, **characterized in that** a drawing tool whose coating has an open pore volume of more than 10% is used.

5. Process according to at least one of Claims 1 to 4, **characterized in that** the tube-drawing process is a Danner process in which a coated blowpipe is used.

6. Process according to at least one of Claims 1 to 4, **characterized in that** the tube-drawing process is a Vello process in which a coated needle is used.

7. Process according to at least one of Claims 1 to 4, **characterized in that** the tube-drawing process is a down-draw process in which a coated needle is used.

8. Process according to at least one of Claims 1 to 7, **characterized in that** a coated drawing tool whose coating material has a diffusion coefficient of at least 1 × 10⁻¹³ m²/s at the temperatures of use is used.

9. Process according to at least one of Claims 1 to 8, **characterized in that** a drawing tool whose coating contains ZrO₂ and/or Al₂O₃ and/or SiO₂ and/or MgO is used.

10. Process according to Claim 9, **characterized in that** a coated drawing tool whose coating contains ZrO₂ is used.

11. Apparatus for producing internally coated glass tubes using the process according to Claim 5,
having
- a Danner tube-drawing installation, in which an inclined, rotatable, rotationally symmetrical, coated blowpipe is arranged, the coating material of which, containing ZrO₂ and/or SiO₂ and/or Al₂O₃ and/or MgO, has a diffusion coefficient of at least 1 × 10⁻³ m²/s at the temperatures of use,
- a furnace for setting a temperature gradient between the outlet from the nozzle and the end of the blowpipe,
- a blowing device for applying a superatmospheric or subatmospheric pressure to the interior of the glass tube which is being drawn.

12. Apparatus according to Claim 11, **characterized in that** the coating of the blowpipe has a specific surface area of at least 50 m²/kg.

13. Apparatus according to Claim 11, **characterized in that** the coating of the blowpipe has an open pore volume of more than 10%.

14. Apparatus according to at least one of Claims 11 to 13, **characterized in that** the coating of the blowpipe has a thickness of at least 10 µm.

15. Apparatus according to at least one of Claims 11 to 14, **characterized in that** the coating of the blowpipe contains ZrO₂.

16. Apparatus for producing internally coated glass tubes using the process according to Claim 6,
having
- a Vello tube-drawing installation, in which a coated needle is arranged vertically, the coating material of which, containing ZrO₂ and/or Al₂O₃ and/or SiO₂ and/or MgO, has a diffusion coefficient of at least 1 × 10⁻¹³ m²/s,
- a Vello muffle,
- a blowing device for applying a superatmospheric or subatmospheric pressure to the interior of the glass tube which is being drawn.

17. Apparatus for producing internally coated glass tubes using the process according to Claim 7,
having
- a down-draw tube-drawing installation, in which a coated needle is arranged vertically, the coating material of which, containing ZrO₂ and/or Al₂O₃ and/or SiO₂ and/or MgO, has a diffusion coefficient of at least 1 × 10⁻¹³ m²/s at the temperatures of use,
- a muffle,
- a blowing device for applying a superatmospheric or subatmospheric pressure to the interior of the glass tube which is being drawn.

18. Apparatus according to Claim 16 or 17, **characterized in that** the coating of the needle has a specific surface area of at least 50 m²/kg.

19. Apparatus according to Claim 16 or 17, **characterized in that** the coating of the needle has an open pore volume of more than 10%.

20. Apparatus according to at least one of Claims 16 to 19, **characterized in that** the coating of the needle has a thickness of at least 10 µm.

21. Apparatus according to at least one of Claims 16 to 20, **characterized in that** the coating of the needle contains ZrO₂.

22. Process for producing internally coated glass tubes, **characterized in that** a porous drawing tool, which releases material on contact with the inner surface of the tube which is being formed, so that the levels of this material on the inner surface of the glass are enriched, is used in a tube-drawing process which is known per se for the production of glass tubes.

23. Apparatus according to Claim 22, **characterized in that** a drawing tool which releases at least 1.5 µg/ (m² × s) of material is used.

24. Apparatus according to Claim 22 or 23, **characterized in that** a drawing tool which has an open pore volume of more than 10% is used.

25. Apparatus according to at least one of Claims 22 to 24, **characterized in that** the tube-drawing process is a Danner process in which a porous blowpipe is used.

26. Apparatus according to at least one of Claims 22 to 25, **characterized in that** a drawing tool which consists of a material which contains ZrO₂ and/or Al₂O₃ and/or SiO₂ and has a diffusion coefficient of at least 1 × 10⁻¹³ m²/s at the temperatures of use is used.

## Revendications

1. Procédé de fabrication de tubes en verre recuits à l'intérieur, **caractérisé en ce que** l'on utilise, dans le cas d'un procédé d'étirage de tubes connu en soi, en vue de la fabrication des tubes en verre, un outil d'étirage revêtu, dont le revêtement libère du matériau de revêtement au moment du contact avec la surface interne du tube qui se forme et qui en enrichit la surface interne du verre.

2. Procédé selon la revendication 1, **caractérisé en ce que** l'on utilise un outil d'étirage, dont le revêtement libère au moins 1,5 µg/(m² x s) de matériau de revêtement.

3. Procédé selon la revendication 1 ou 2, **caractérisé en ce que** l'on utilise un outil d'étirage, dont le revêtement présente une surface spécifique d'au moins 50 m²/kg.

4. Procédé selon la revendication 1 ou 2, **caractérisé en ce que** l'on utilise un outil d'étirage, dont le revêtement présente un espace ouvert de pores de plus de 10%.

5. Procédé selon l'une quelconque des revendications 1 à 4, **caractérisé en ce qu'**il s'agit dans le cas du procédé d'étirage de tubes d'un procédé conformément à Danner, lors duquel on utilise une felle revêtue.

6. Procédé selon l'une quelconque des revendications 1 à 4, **caractérisé en ce qu'**il s'agit dans le cas du procédé d'étirage de tubes d'un procédé conformément à Vello, lors duquel on utilise une aiguille revêtue.

7. Procédé selon l'une quelconque des revendications 1 à 4, **caractérisé en ce qu'**il s'agit dans le cas du procédé d'étirage de tubes, d'un procédé d'étirage par le bas, lors duquel on utilise une aiguille revêtue.

8. Procédé selon l'une quelconque des revendications 1 à 7, **caractérisé en ce que** l'on utilise un outil d'étirage revêtu, dont le matériau de revêtement possède aux températures d'utilisation un coefficient de diffusion d'au moins 1 x 10⁻¹³ m²/s.

9. Procédé selon l'une quelconque des revendications 1 à 8, **caractérisé en ce que** l'on utilise un outil d'étirage, dont le revêtement contient du ZrO₂ et/ou Al₂O₃ et/ou SiO₂ et/ou MgO.

10. Procédé selon la revendication 9, **caractérisé en ce que** l'on utilise un outil d'étirage revêtu, dont le revêtement contient du ZrO₂.

11. Dispositif en vue de la fabrication de tubes en verre recuits à l'intérieur conformément au procédé selon la revendication 5,
avec
- une installation d'étirage de tubes, conformément à Danner, dans laquelle est disposée une felle revêtue, inclinée, à symétrie de rotation, capable de rotation, dont le matériau de revêtement, contenant du ZrO₂ et/ou SiO₂ et/ou Al₂O₃ et/ou MgO, possède, aux températures d'utilisation, un coefficient de diffusion d'au moins 1 x 10⁻¹³ m²/s,
- un four en vue du réglage d'un gradient de température entre l'évacuation hors de la buse et l'extrémité de la felle,
- un dispositif de soufflage en vue de la mise sous pression de l'espace interne du tube en verre à étirer avec une surpression ou une dépression par rapport à la pression environnante.

12. Dispositif selon la revendication 11, **caractérisé en ce que** le revêtement de la felle présente une surface spécifique d'au moins 50 m²/kg.

13. Dispositif selon la revendication 11, **caractérisé en ce que** le revêtement de la felle présente un espace ouvert de pores de plus de 10%.

14. Dispositif selon l'une quelconque des revendications 11 à 13, **caractérisé en ce que** le revêtement de la felle présente une épaisseur d'au moins 10 µm.

15. Dispositif selon l'une quelconque des revendications 11 à 14, **caractérisé en ce que** le revêtement de la felle contient du ZrO₂.

16. Dispositif en vue de la fabrication de tubes en verre recuits à l'intérieur conformément au procédé selon la revendication 6,
avec
- une installation d'étirage de tubes, conformément à Vello, dans laquelle est disposée verticalement une aiguille revêtue, dont le matériau de revêtement, contenant du ZrO₂ et/ou SiO₂ et/ou Al₂O₃ et/ou MgO, possède un coefficient de diffusion d'au moins 1 x 10⁻¹³ m²/s,
- un moufle selon Vello
- un dispositif de soufflage en vue de la mise sous pression de l'espace interne du tube en verre à étirer avec une surpression ou une dépression par rapport à la pression environnante.

17. Dispositif en vue de la fabrication de tubes en verre recuits à l'intérieur conformément au procédé selon la revendication 7,
avec
- une installation d'étirage par le bas de tubes, dans laquelle est disposée verticalement une aiguille revêtue, dont le matériau de revêtement, contenant du ZrO₂ et/ou SiO₂ et/ou Al₂O₃ et/ou MgO, possède, aux températures d'utilisation, un coefficient de diffusion d'au moins 1 x 10⁻¹³ m²/s,
- un moufle,
- un dispositif de soufflage en vue de la mise sous pression de l'espace interne du tube en verre à étirer avec une surpression ou une dépression par rapport à la pression environnante.

18. Dispositif selon la revendication 16 ou 17, **caractérisé en ce que** le revêtement de l'aiguille présente une surface spécifique d'au moins 50 m²/kg.

19. Dispositif selon la revendication 16 ou 17, **caractérisé en ce que** le revêtement de l'aiguille présente un espace ouvert de pores de plus de 10%.

20. Dispositif selon l'une quelconque des revendications 16 à 19, **caractérisé en ce que** le revêtement de l'aiguille présente une épaisseur d'au moins 10 µm.

21. Dispositif selon l'une quelconque des revendications 16 à 20, **caractérisé en ce que** le revêtement de l'aiguille contient du ZrO₂.

22. Procédé en vue de la fabrication de tubes en verre recuits à l'intérieur, **caractérisé en ce que** l'on utilise, dans le cas d'un procédé d'étirage de tubes connu en soi, en vue de la fabrication de tubes en verre, un outil d'étirage poreux qui libère, au moment du contact avec la surface interne du tube qui se forme, du matériau et qui en enrichit la surface interne du verre.

23. Procédé selon la revendication 22, **caractérisé en ce que** l'on utilise un outil d'étirage qui libère au moins 1,5 µg/(m² x s) de matériau.

24. Procédé selon la revendication 22 ou 23, **caractérisé en ce que** l'on utilise un outil d'étirage qui présente un espace ouvert de pores de plus de 10%.

25. Procédé selon l'une quelconque des revendications 22 à 24, **caractérisé en ce qu'**il s'agit, dans le cas du procédé d'étirage de tubes, d'un procédé conformément à Danner, lors duquel on utilise une felle poreuse.

26. Procédé selon l'une quelconque des revendications 22 à 25, **caractérisé en ce que** l'on utilise un outil d'étirage qui se compose d'un matériau qui contient du ZrO₂ et/ou Al₂O₃ et/ou SiO₂ et qui possède, aux températures d'utilisation, un coefficient de diffusion d'au moins 1 x 10⁻¹³ m²/s.
